# EUROPÄISCHE PATENTSCHRIFT

(11) **EP 4 015 269 B1**
(45) Veröffentlichungstag und Bekanntmachung des Hinweises auf die Patenterteilung: **30.08.2023**
(21) Anmeldenummer: 21215302.7
(22) Anmeldetag: 16.12.2021
(51) Int. Cl.: B60J 7/12

(54) **VERDECK EINES CABRIOLET-FAHRZEUGS**
SOFT TOP FOR A CONVERTIBLE
CAPOTE D'UN VÉHICULE CABRIOLET

(30) Priorität: 18.12.2020 DE 102020134122
(43) Veröffentlichungstag der Anmeldung: 22.06.2022
(73) Patentinhaber: Valmet Automotive Oy, 23500 Uusikaupunki (FI)
(72) Erfinder: Hollenbeck, Sven, 49492 Westerkappeln (DE)
(74) Vertreter: Kronthaler, Schmidt & Coll.

(56) Entgegenhaltungen:
- DE-C- 640 619
- GB-A- 944 518
- US-A1- 2012 200 111

## Beschreibung

Die Erfindung betrifft ein Verdeck eines Cabriolet-Fahrzeugs gemäß der im Oberbegriff des Patentanspruches 1 näher definierten Art.

Bei konventionellen Verdecken wird ein textiler Dachhimmel oder ein textiler äußerer Verdeckbezug über Zugmittel, wie z. B. Seile, Kordeln und dergleichen, geführt, die über Umlenkungen an Gestängebauteilen befestigt sind.

Problematisch dabei ist der begrenzt zur Verfügung stehende Weg dieser Zugmittel und die Komplexität der Zugmittelsteuerung.

Aus der DE 10 2008 063 451 A1 ist ein Verdeck eines Cabriolet-Fahrzeugs mit wenigstens zwei Dachsegmenten und einem Innenhimmel bekannt, wobei die Dachsegmente mittels eines Verdeckgestänges zwischen einer geschlossenen Position und einer geöffneten Ablageposition verfahrbar sind. Der Innenhimmel ist dem Fahrzeuginnenraum zugewandt und wenigstens bereichsweise lose an wenigstens einem Dachsegment und/oder dem Verdeckgestänge geführt. Zusätzlich ist eine Spanneinrichtung mit wenigstens einem Spannmittel und wenigstens einer Umlenkeinrichtung vorgesehen. Die Umlenkeinrichtung wirkt derart mit dem Spannmittel zusammen, dass der Innenhimmel in geschlossener Position des Verdecks eine aufgespannte Position einnimmt. Zusätzlich ist die Umlenkeinrichtung lösbar am Dachsegment und/oder dem Verdeckgestänge angeordnet.

Problematisch dabei ist jedoch, dass die Anforderung an das Verdeck, dass der Innenhimmel bei geschlossener Position des Verdecks straff aufgespannt ist und bei einer Verdeckbewegung nicht hinderlich ist, nur mit erheblichem konstruktiven Aufwand erzielbar ist. Dies beruht auf der Tatsache, dass bereits geringe Fertigungstoleranzen der wirksamen Länge des Spannmittels bzw. des Zugmittels entweder zu geringe Spannkräfte oder zu hohe Spannkräfte verursachen. Dabei resultiert aus zu geringen Spannkräften eine unzureichende Spannung des Innenhimmels, während zu hohe Spannkräfte irreversible Überdehnungen des Dachhimmels und auch eine Beschädigung der Anbindungen des Dachhimmels an den Dachteilen oder an dem Verdeckgestänge bewirken können.

Des Weiteren zeigt die DE 10 2007 060 483 B4 eine Fahrzeugdachvorrichtung mit wenigstens zwei festen Dachteilen, die zwischen einem den Fahrzeuginnenraum überdeckenden und einem den Fahrzeuginnenraum freigebenden Betriebszustand verfahrbar ausgebildet sind und die wenigstens bereichsweise mit einem flexiblen Dachhimmel verbunden sind. Bereiche der Dachteile, die im ersten Betriebszustand aneinander anliegen und Stoßbereiche ausbilden, sind während einer Bewegung zwischen den beiden Betriebszuständen voneinander beabstandet.

Der flexible Dachhimmel ist über mindestens eine Verbindungseinrichtung mit wenigstens einem Dachteil verbunden. Zusätzlich führt der Dachhimmel während der Bewegung der Dachteile wenigstens bereichsweise eine Relativbewegung aus. Die Verbindungseinrichtung weist ein sich in Fahrzeugdachquerrichtung erstreckendes und sowohl mit dem Dachhimmel als auch mit dem ersten Dachteil verbundenes starres Spannelement auf. Das Spannelement hält den Dachhimmel in einer Spannlage. Ein Verbindungsbereich zwischen dem Dachhimmel und dem Spannelement ist in Bezug auf das erste Dachteil verschiebbar und/oder verschwenkbar. Die Verbindungseinrichtung ist in einem bei geschlossenem Fahrzeugdach einer Windschutzscheibe zugewandten Bereich des ersten Dachteiles vorgesehen.

Die Spanneinrichtung kann bei der DE 10 2007 060 483 B4 als Steuerseile ausgebildete Zugmittel umfassen, die einenends mit dem Spannelement und anderenends mit einem der Dachteile und/oder mit einer die Dachteile bewegenden Verdeckkinematik wirkverbunden sind. Mittels den Zugmitteln ist am Dachhimmel jeweils eine Spannkraft anlegbar. Des Weiteren wird ein das Spannelement bewegender Antriebsmotor vorgeschlagen, dessen Antrieb an eine Bewegung der Dachteile gekoppelt ist, um die Spannkraft am Dachmittel anlegen zu können, die der Zugkraft entgegengerichtet ist, die am Dachhimmel angreift. Damit soll während einer Öffnungs- und Schließbewegung der Fahrzeugdachvorrichtung die Möglichkeit bestehen, unzulässige Dehnungen des Dachhimmels zu vermeiden.

Darüber hinaus wird vorgeschlagen, die Verbindungseinrichtung mit einer Auf- und Abwickeleinheit auszubilden, die gegenüber dem ersten Dachteil verschiebbar und/oder verschwenkbar ausgebildet ist. Damit soll eine aktive Länge des Dachhimmels in Abhängigkeit des jeweils vorliegenden Betriebszustandes der Fahrzeugdachvorrichtung zum Teil durch Auf- und Abwickeln variiert werden.

Zusätzlich kann der Dachhimmel in einem weiteren Bereich über eine Stofffahne mit einem der Dachteile verbunden sein, deren Länge zwischen Anbindungsbereichen der Stofffahne mit einem Dachteile und dem Dachhimmel über eine Auf- und Abwickeleinrichtung betriebszustandsabhängig variierbar ist. Dadurch soll eine Relativbewegung des Dachhimmels gegenüber den Dachteilen zur Verfügung gestellt werden.

Die aus der DE 2007 060 483 B4 bekannten Lösungen sind allesamt konstruktiv aufwändig und bedingen hohe Herstellkosten.

Dokument US 2012/200111 A1 offenbart ein Verdeck ähnlich der Präambel von Anspruch 1.

Der vorliegenden Erfindung liegt daher die Aufgabe zugrunde, ein Verdeck eines Cabriolet-Fahrzeugs zu schaffen, welches hinsichtlich einer Anbindung eines textilen Bezugs an eine Verdeckkinematik verbessert ist.

Erfindungsgemäß wird diese Aufgabe mit einem Verdeck eines Cabriolet-Fahrzeugs mit den Merkmalen des Patentanspruches 1 gelöst.

Das erfindungsgemäße Verdeck eines Cabriolet-Fahrzeugs ist zwischen einer geschlossenen Position und einer offenen, abgelegten Position verlagerbar und umfasst wenigstens einen textilen Bezug. Der Bezug bedeckt zumindest in geschlossener Position des Verdecks wenigstens bereichsweise eine Verdecckinematik, die mit wenigstens einem Getriebe ausgeführt ist. Zusätzlich steht der Bezug über wenigstens ein Zugmittel mit der Verdeckkinematik in Wirkverbindung. Die Zugmittel sind dazu eingerichtet, den Bezug in geschlossener Position in einem gespannten Zustand zu halten.

Erfindungsgemäß ist eine wirksame Länge des Zugmittels mittels einer Auf- und einer Abrolleinheit variierbar. Dabei steht die Auf- und Abrolleinheit mit einem drehbaren Bauteil eines Getriebes der Verdeckkinematik in Wirkverbindung.

Durch die Auf- und Abrolleinheit für das Zugmittel ist der Bezug in allen Betriebszuständen des Verdecks mit der gewünschten Spannkraft beaufschlagbar, womit auf einfache Art und Weise unzulässig hohe Belastungen des Bezugs vermeidbar sind, ohne einen zu geringen Spannzustand des Bezugs in geschlossener Position des Verdecks zu verursachen.

Die vorgeschlagenen Führung des Zugmittels ermöglicht eine insgesamt vereinfachte und bauraumsparende Ausführung des erfindungsgemäßen Verdecks, da bereits vorhandene Komponenten, wie eine Antriebseinheit, ein Getriebe und eine Verdeckkinematik, für das Spannen des Bezugs über das Zugmittel verwendet werden.

Bei einer konstruktiv einfachen und kostengünstigen Ausführungsform des erfindungsgemäßen Verdecks ist die Auf- und Abrolleinheit mit einer Seilzugrolle ausgebildet. Dabei kann das Zugmittel an der Seilzugrolle einenends befestigt sein und auf der Seilzugrolle aufgerollt oder von dieser abgewickelt werden.

Das wenigstens eine Getriebe kann im Kraftfluss zwischen einer Antriebseinheit und einem Verdeckgestänge der Verdeckkinematik angeordnet sein. Dann ist das Auf- und Abrollen des Zugmittels über das Getriebe auf einfache Art und Weise an die Stellbewegung des Verdecks gekoppelt.

Umfasst die Antriebseinheit einen Elektromotor, der vorzugsweise in beide Drehrichtungen antreibbar ist und dessen Antriebswelle mit dem drehbaren Bauteil des Getriebes in Antriebsverbindung steht, ist das Verdeck konstruktiv einfach ausgeführt und mit geringem Steuer- und Regelaufwand betreibbar.

Das drehbare Bauteil des zur Zugmittelführung genutzten Getriebes kann eine Welle oder ein Zahnrad des Getriebes sein. Dann ist die Auf- und Abrolleinheit bzw. deren Seilzugrolle einfach rotatorisch antreibbar.

Bei zweckmäßigen Weiterbildungen des erfindungsgemäßen Verdecks kann das Zugmittel ein Seil oder eine Kordel sein.

Wird das Zugmittel zur Darstellung eines definierten Zugweges am Verdeckgestänge geführt und umgelenkt, ist der Bezug, der ein dem Fahrzeuginnenraum zugewandter sogenannter Dachhimmel oder ein äußerer gegebenenfalls mehrlagiger Verdeckbezug oder eine Kombination hiervon sein kann, in erforderlichem Umfang in den gespannten Zustand überführbar, wenn das Verdeck in geschlossener Position angeordnet ist.

Besonders einfach umsetzbar ist die Erfindung bei elektrisch betriebenen Verdecken, welche üblicherweise ein Getriebe umfassen. Auch bekannte Verdecke können auf konstruktiv einfache Art und Weise im erfindungsgemäßen Umfang mit einer Seilzugrolle oder dergleichen ausgeführt werden, die an einem Zahnrad eines solchen Getriebes befestigt ist. Über eine solche Seilrolle ist auf bauraumgünstige Art und Weise ein Drehwinkel größer als 360° umsetzbar und eine wirksame Länge des Zugmittels kann so variiert werden, dass der Bezug in gewünschtem Umfang angesteuert wird und unzulässig hohe Spannkräfte im Bezug während einer Stellbewegung des Verdecks und auch in offenem oder im geschlossenen Zustand des Verdecks vermieden werden. Dadurch besteht die Möglichkeit, das Zugmittel in definiertem Umfang auf- und abwickeln zu können.

Der Zugweg ist über die aufgewickelten Kordeln bzw. Seilen nahezu unbegrenzt darstellbar und der zur Verfügung stehende Weg dieser Kordeln bzw. Seile kann beliebig lang ausgeführt werden. Zudem ist dadurch eine Seilsteuerung mit geringer Komplexität zur Verfügung stellbar.

Weitere Vorteile und vorteilhafte Ausführungsformen der Erfindung ergeben sich aus den Patentansprüchen und dem nachfolgend unter Bezugnahme auf die Zeichnungen prinzipmäßig beschriebenen Ausführungsbeispiel.

Es zeigt:
Fig. 1 eine vereinfachte perspektivische Darstellung eines Cabriolet-Fahrzeugs mit einem Verdeck in einer geschlossenen Position, das einen flexiblen Verdeckbezug aufweist, der nur hälftig dargestellt ist;
Fig. 2 eine vergrößerte Teildarstellung einer Verdeckkinematik des Verdecks gemäß Fig. 1; und
Fig. 3 eine weitere Teildarstellung der Verdeckkinematik des Verdecks gemäß Fig. 1 in einer in Fig. 2 näher gekennzeichneten Ansicht III.

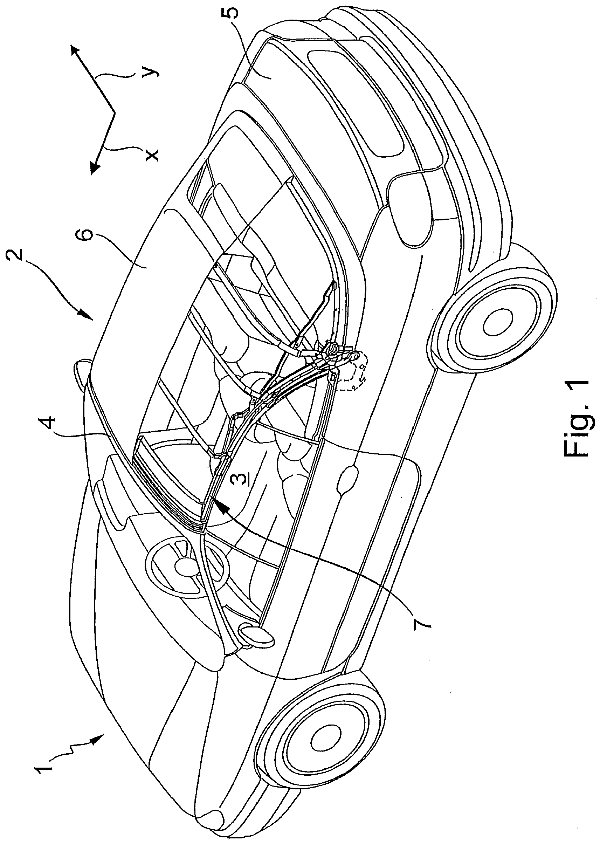

In Fig. 1 ist ein Cabriolet-Fahrzeug 1 mit einem Verdeck 2 gezeigt, welches sich in einer geschlossenen Position befindet und hierbei einen Fahrgastraum 3 überdeckt. In der geschlossenen Position erstreckt sich das Verdeck 2 in Fahrzeuglängsrichtung x von einem Windschutzscheibenrahmen 4 bis zu einem Heckdeckel 5 und übergreift den Fahrgastraum 3 in Fahrzeugquerrichtung y über die gesamte Dachbreite. Aus dieser geschlossenen Position kann das Verdeck 2 in eine offene Position verlagert werden, in der es in einem heckseitigen Ablageraum abgelegt ist.

Darüber hinaus umfasst das Verdeck 2 einen textilen Bezug 6, der in geschlossener Position eine Verdeckkinematik 7 des Verdecks 2 bedeckt und einen äußeren Verdeckbezug bildet.

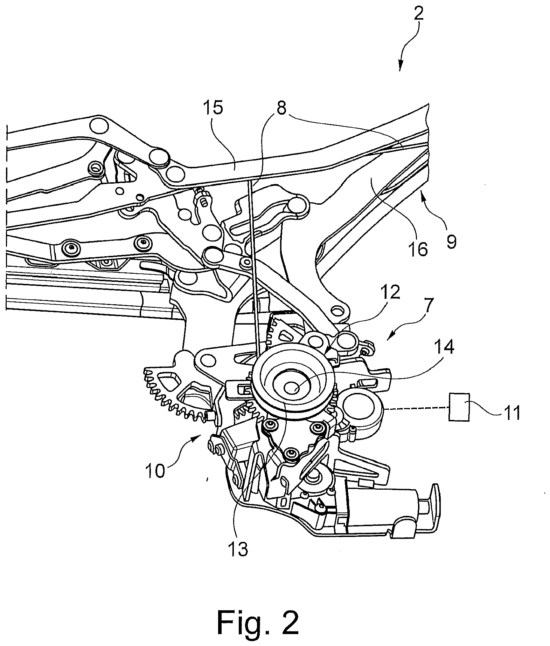

Der Bezug 6 steht in der in Fig. 2 näher dargestellten Art und Weise über wenigstens ein Zugmittel 8 mit der Verdeckkinematik 7 in Wirkverbindung. Das Zugmittel 8 hält den flexiblen und faltbaren Bezug 6 in geschlossener Position des Verdecks 2 in einem gespannten Zustand mit einer auf die Verdeckkinematik und die Dehnungseigenschaften des Textils des Bezugs abgestimmten Spannkraft. Zudem ist das Zugmittel 8 dazu vorgesehen, den Bezug 6 während einer Öffnungsbewegung und auch während einer Schließbewegung des Verdecks 2 so anzusteuern, dass die Verdeckbewegung durch den Bezug 6 nicht behindert wird und der Bezug 6 durch die Verdeckkinematik 7 nicht beschädigt wird.

Die Verdeckkinematik 7 umfasst neben einem Verdeckgestänge 9 ein Getriebe 10. Das Getriebe 10 ist im Kraftfluss zwischen einer Antriebseinheit 11 und dem Verdeckgestänge 9 angeordnet. Über das Getriebe 10 ist ein Antriebsmoment der Antriebseinheit 11 in einem derartigen Umfang wandelbar, dass die Verstellung des Verdecks 2 zwischen der geschlossenen Position und der offenen Position mit einem Elektromotor realisierbar ist, der lediglich eine geringe Antriebsleistung zur Verfügung stellt.

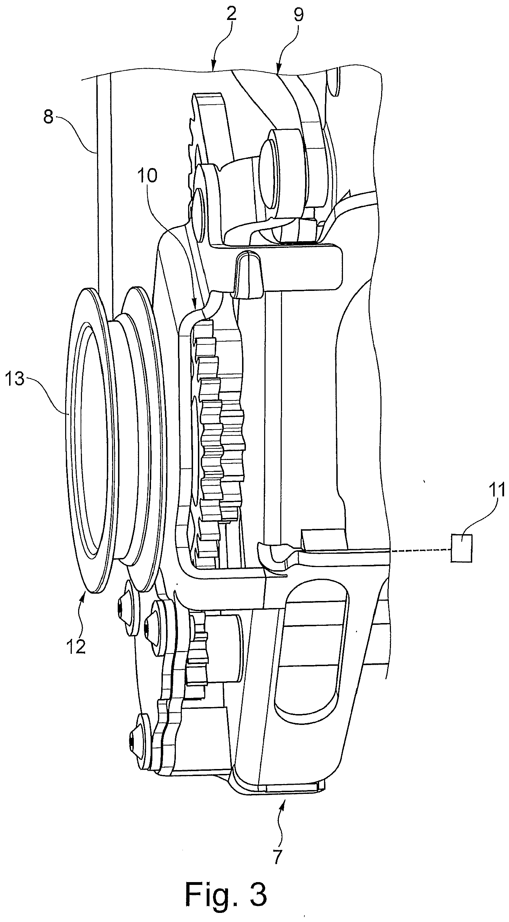

Das Zugmittel 8 ist in der in Fig. 2 und Fig. 3 näher darstellten Art und Weise einenends mit einer Auf- und Abrolleinheit 12 wirkverbunden, die eine Seilzugrolle 13 umfasst. Die Seilzugrolle 13 steht mit einem drehbaren Bauteil 14 des Getriebes 10 drehfest in Wirkverbindung, sodass eine Drehbewegung des drehbaren Bauteils 14 des Getriebes 10 eine Drehbewegung der Seilzugrolle 13 zur Folge hat.

Die Antriebseinheit 11 ist mit einem Elektromotor ausgebildet, der bei dieser Ausführung in beide Drehrichtungen antreibbar ist und dessen Antriebswelle mit dem drehbaren Bauteil 14 des Getriebes 10 in Antriebsverbindung steht.

Dabei besteht in Abhängigkeit des jeweils vorliegenden Anwendungsfalles die Möglichkeit, dass das Zugmittel 8 während einer Öffnungsbewegung des Verdecks 2 und einer damit korrespondierenden Antriebsdrehbewegung der Antriebseinheit 11 auf die Seilzugrolle 13 aufgerollt oder von dieser abgewickelt wird.

Analog kann das Zugmittel 8 während einer Schließbewegung des Verdecks, die mit einer entgegengesetzten Antriebsdrehbewegung der Antriebseinheit 11 einhergeht, je nach erforderlicher Führung des Bezugs 6 bzw. dessen Faltung entweder von der Seilzugrolle 13 abgerollt oder auf diese aufgewickelt werden.

Bei dem in Fig. 2 und in Fig. 3 aufgeführten Ausführungsbeispiel des Verdecks 2 ist das Zugmittel 8 an einem ersten Gestängehebel 15 und an einem zweiten Gestängehebel 16 geführt und umgelenkt. Dadurch wird das Textil 6 bzw. der Verdeckbezug des Verdecks 2 in gewünschtem Umfang in geschlossener Position des Verdecks 2 im erforderlichen Umfang gespannt, ohne dabei unzulässigerweise belastet zu werden.

### BEZUGSZEICHENLISTE

- 1: Cabriolet-Fahrzeug
- 2: Verdeck
- 3: Fahrgastraum
- 4: Windschutzscheibenrahmen
- 5: Heckdeckel
- 6: Bezug
- 7: Verdeckkinematik
- 8: Zugmittel
- 9: Verdeckgestänge
- 10: Getriebe
- 11: Antriebseinheit
- 12: Auf- und Abrolleinheit
- 13: Seilzugrolle
- 14: drehbares Bauteil
- 15, 16: Gestängehebel
- x: Fahrzeuglängsrichtung
- y: Fahrzeugquerrichtung

## Patentansprüche

1. Verdeck (2) eines Cabriolet-Fahrzeugs (1), das zwischen einer geschlossenen Position und einer offenen, abgelegten Position verlagerbar ist und das wenigstens einen textilen Bezug (6) umfasst, der zumindest in geschlossener Position des Verdecks (2) wenigstens bereichsweise eine Verdeckkinematik (7) bedeckt, die mit wenigstens einem Getriebe (10) ausgeführt ist, wobei der Bezug (6) über wenigstens ein Zugmittel (8) mit der Verdeckkinematik (7) in Wirkverbindung steht und das Zugmittel (8) dazu eingerichtet ist, den Bezug (6) in geschlossener Position in einem gespannten Zustand zu halten,
**dadurch gekennzeichnet, dass** eine wirksame Länge des Zugmittels (8) mittels einer Auf- und Abrolleinheit (12) variierbar ist, wobei die Auf- und Abrolleinheit (12) mit einem drehbaren Bauteil (14) des wenigstens einen Getriebes (10) der Verdeckkinematik (7) in Wirkverbindung steht.

2. Verdeck nach Anspruch 1,
**dadurch gekennzeichnet, dass** die Auf- und Abrolleinheit (12) mit einer Seilzugrolle (13) ausgebildet ist, an der das Zugmittel (8) einenends befestigt ist und auf der das Zugmittel (8) aufrollbar und von der das Zugmittel (8) abrollbar ist.

3. Verdeck nach Anspruch 1 oder 2,
**dadurch gekennzeichnet, dass** das Getriebe (10) im Kraftfluss zwischen einer Antriebseinheit (11) und einem Verdeckgestänge (9) der Verdecckinematik (7) angeordnet ist.

4. Verdeck nach Anspruch 3,
**dadurch gekennzeichnet, dass** die Antriebseinheit (11) einen Elektromotor umfasst, der vorzugsweise in beide Drehrichtungen betreibbar ist und dessen Antriebswelle mit dem drehbaren Bauteil (14) des Getriebes (10) in Antriebsverbindung steht.

5. Verdeck nach Anspruch 4,
**dadurch gekennzeichnet, dass** das drehbare Bauteil (14) des Getriebes eine Welle oder ein Zahnrad des Getriebes (10) ist.

6. Verdeck nach einem der Ansprüche 1 bis 5,
**dadurch gekennzeichnet, dass** das Zugmittel (8) ein Seil oder eine Kordel ist.

7. Verdeck nach einem der Ansprüche 1 bis 6,
**dadurch gekennzeichnet, dass** das Zugmittel (8) zur Darstellung eines definierten Zugweges am Verdeckgestänge (9) geführt und umgelenkt ist.

8. Verdeck nach einem der Ansprüche 1 bis 7,
**dadurch gekennzeichnet, dass** der Bezug (6) ein Dachhimmel und/oder ein äußerer Verdeckbezug ist.

## Claims

1. A hood (2) of a convertible vehicle (1) which is displaceable between a closed position and an open, laid-down position, and which comprises at least one textile cover (6) which, at least in the closed position of the hood (2), covers at least partly a hood kinematics (7) which is designed with at least one transmission (10), the cover (6) being operatively connected to the hood kinematics (7) via at least one traction means (8), and the traction means (8) being designed to keep the cover (6) in a tensioned state in the closed position,
**characterized in that** an effective length of the traction means (8) can be varied by means of a winding and unwinding unit (12), the winding and unwinding unit (12) being operatively connected to a rotatable component (14) of the at least one transmission (10) of the hood kinematics (7).

2. A hood according to claim 1,
**characterized in that** the winding and unwinding unit (12) is formed with a pulley (13) to which the traction means (8) is attached at one end and on which the traction means (8) can be wound and from which the traction means (8) can be unwound.

3. A hood according to claim 1 or 2,
**characterized in that** the transmission (10) is arranged in the power flow between a drive unit (11) and a hood linkage (9) of the hood kinematics (7).

4. A hood according to claim 3,
**characterized in that** the drive unit (11) comprises an electric motor which is preferably operable in both directions of rotation, and the drive shaft of which is in driving connection with the rotatable component (14) of the transmission (10).

5. Hood according to claim 4,
**characterized in that** the rotatable component (14) of the transmission is a shaft or a gear of the transmission (10).

6. Hood according to one of claims 1 to 5,
**characterized in that** the traction means (8) is a rope or a cord.

7. A hood according to one of claims 1 to 6,
**characterized in that** the traction means (8) is guided and deflected on the hood linkage (9) to present a defined traction path.

8. A hood according to one of claims 1 to 7,
**characterized in that** the cover (6) is a headliner and/or an outer soft top cover.

## Revendications

1. Capote (2) d'un véhicule cabriolet (1), qui peut être déplacée entre une position fermée et une position ouverte et rangée et qui comprend au moins un revêtement textile (6) qui, au moins dans la position fermée de la capote (2), recouvre au moins par zones une cinématique de capote (7), qui est réalisée avec au moins un engrenage (10), le revêtement (6) étant en liaison active avec la cinématique de capote (7) par l'intermédiaire d'au moins un moyen de traction (8) et le moyen de traction (8) étant conçu pour maintenir le revêtement (6) dans un état tendu en position fermée,
**caractérisée en ce qu'**une longueur efficace du moyen de traction (8) peut être modifiée au moyen d'une unité d'enroulement et de déroulement (12), l'unité d'enroulement et de déroulement (12) étant en liaison active avec un composant rotatif (14) de l'au moins une transmission (10) de la cinématique de capote (7).

2. Capote selon la revendication 1,
**caractérisée en ce que** l'unité d'enroulement et de déroulement (12) est réalisée avec une poulie de traction de câble (13), à laquelle le moyen de traction (8) est fixé à une extrémité et sur laquelle le moyen de traction (8) peut être enroulé et à partir de laquelle le moyen de traction (8) peut être déroulé.

3. Capote selon la revendication 1 ou 2,
**caractérisée en ce que** la transmission (10) est disposé dans le flux de force entre une unité d'entraînement (11) et une tringlerie (9) de la cinématique de capote (7).

4. Capote selon la revendication 3,
**caractérisée en ce que** l'unité d'entraînement (11) comprend un moteur électrique qui peut de préférence être actionné dans les deux sens de rotation et dont l'arbre d'entraînement est en liaison d'entraînement avec l'élément rotatif (14) de la transmission (10).

5. Capote selon la revendication 4,
**caractérisé en ce que** l'élément rotatif (14) de la transmission est un arbre ou un pignon de la transmission (10).

6. Capote selon l'une quelconque des revendications 1 à 5,
**caractérisé en ce que** le moyen de traction (8) est une corde ou un cordon.

7. Capote selon l'une quelconque des revendications 1 à 6,
**caractérisée en ce que** le moyen de traction (8) est guidé et dévié sur la tringlerie de la capote (9) pour représenter un trajet de traction défini.

8. Capote selon l'une quelconque des revendications 1 à 7,
**caractérisé en ce que** le revêtement (6) est un ciel de toit et/ou un revêtement extérieur de la capote.
